# EUROPEAN PATENT APPLICATION

(11) **EP 4 768 753 A1**
(43) Date of publication of application: **01.07.2026**
(21) Application number: 25223176.6
(22) Date of filing: 12.12.2025
(51) Int. Cl.: F16H 47/04

(54) **POWER TRANSMISSION DEVICE FOR WORK VEHICLE AND WORK VEHICLE**

(30) Priority: 26.12.2024 JP 2024230402
(71) Applicant: Kubota Corporation, Osaka-shi, Osaka 530-0011 (JP)
(72) Inventor: TSUCHIDA, Tomonari, SAKAI-SHI, OSAKA, 5900908 (JP); IWASE, Ryoma, SAKAI-SHI, OSAKA, 5900908 (JP); TANAKA, Tomoyuki, SAKAI-SHI, OSAKA, 5900908 (JP); HAYAMI, Atsuro, SAKAI-SHI, OSAKA, 5900908 (JP); NAKASHIMA, Koji, SAKAI-SHI, OSAKA, 5900908 (JP); HOKEGUCHI, Takuma, SAKAI-SHI, OSAKA, 5900908 (JP)
(74) Representative: Cabinet Beau de Loménie

(57) **Abstract**

A power transmission device (10) for a work vehicle (100) includes a transmission (11) including an input shaft (20) rotationally driven by a prime mover (103), a continuously variable transmission (30), a planetary gear mechanism (40), and a plurality of transmission gears (50). The first planetary gear mechanism (41) includes a first ring gear (41R), a first sun gear (41S), and a first planetary gear (41P). The second planetary gear mechanism (42) includes a second ring gear (42R), a second sun gear (42S), and a second planetary gear (42P). The first planetary gear (41P) further includes a third planetary gear (43P) that meshes with the second planetary gear (42P). An outer diameter dimension (RS1) of the first sun gear (41S) is larger than an outer diameter dimension (RS2) of the second sun gear (42S), and an inner diameter dimension (RR2) of the second ring gear (42R) is larger than an inner diameter dimension (RR1) of the first ring gear (41R).

## Description

### TECHNICAL FIELD

The present invention relates to a power transmission device for a work vehicle and a work vehicle including the power transmission device.

### BACKGROUND ART

Conventionally, a power transmission device for a work vehicle including a continuously variable transmission and a planetary gear mechanism has been known (see Patent Literature 1). The power transmission device directly inputs power from a prime mover (engine) to the planetary gear mechanism, and inputs power from the prime mover to the planetary gear mechanism via the continuously variable transmission. The power transmission device outputs power from any of a sun gear, a ring gear, and a planetary carrier of the planetary gear mechanism according to the selected gear position.

### CITATION LIST

### [PATENT LITERATURE]

PATENT LITERATURE 1: Japanese Laid-Open Patent Publication No. 2013-188185

### SUMMARY OF THE INVENTION

### [TECHNICAL PROBLEM]

In the power transmission device, when a ratio of power input to the planetary gear mechanism via the continuously variable transmission increases among the power input to the planetary gear mechanism, an output loss (hereinafter, also referred to as power loss) caused by frictional resistance increases. Conventionally, a work vehicle equipped with the power transmission device increases a swash plate angle of a continuously variable transmission when traveling at high speed. For this reason, in the conventional work vehicle, a ratio of power input via the continuously variable transmission increases during high-speed traveling, and thus power loss increases.

Therefore, an object of the present disclosure is to provide a power transmission device for a work vehicle capable of reducing power loss during high-speed traveling.

### [SOLUTION TO PROBLEM]

A power transmission device for a work vehicle of the present disclosure is a power transmission device for a work vehicle including a transmission including an input shaft rotationally driven by a prime mover, a first gear mechanism and a second gear mechanism driven by the input shaft, a continuously variable transmission including a hydraulic pump driven by the first gear mechanism and a hydraulic motor driven by the hydraulic pump, a planetary gear mechanism driven by the second gear mechanism and the hydraulic motor, and a plurality of transmission gears to which an output of the planetary gear mechanism is transmitted, in which the plurality of transmission gears includes a first transmission gear corresponding to a first speed range which is a lowest speed side, a second transmission gear corresponding to a second speed range which is a higher speed side than the first speed range, a third transmission gear corresponding to a third speed range which is a higher speed side than the second speed range, and a fourth transmission gear corresponding to a fourth speed range which is a highest speed side, the planetary gear mechanism includes a first planetary gear mechanism and a second planetary gear mechanism coaxial with the input shaft and provided side by side in an axial direction of the input shaft, the first planetary gear mechanism and the second planetary gear mechanism have a common planetary carrier, the first planetary gear mechanism includes a first ring gear driven by the second gear mechanism, a first sun gear driven by the hydraulic motor, and a first planetary gear that meshes with the first ring gear and the first sun gear, the second planetary gear mechanism includes a second ring gear that transmits rotation to the first transmission gear, a second sun gear that transmits rotation to the second transmission gear and the fourth transmission gear, and a second planetary gear that meshes with the second ring gear, the second sun gear, and the first planetary gear, the first planetary gear includes an extension portion extending to the second planetary gear mechanism in the axial direction, and includes a third planetary gear that meshes with the second planetary gear in the extension portion, the planetary carrier rotatably supports the first planetary gear and the second planetary gear, and transmits rotation to the third transmission gear, an outer diameter dimension of the first sun gear is larger than an outer diameter dimension of the second sun gear, and an inner diameter dimension of the second ring gear is larger than an inner diameter dimension of the first ring gear.

### [ADVANTAGEOUS EFFECTS OF THE INVENTION]

According to the power transmission device for a work vehicle of the present disclosure, power loss during high-speed traveling can be reduced.

### BRIEF DESCRIPTION OF DRAWINGS

FIG. 1 is a side view illustrating an example of a work vehicle.
FIG. 2 is a skeleton diagram illustrating a power transmission device for a work vehicle.
FIG. 3 is a partially enlarged skeleton diagram of a planetary gear mechanism in FIG. 2.
FIG. 4 is a partial cross-sectional view of the planetary gear mechanism.
FIG. 5 is a control block diagram of the power transmission device.
FIG. 6 is a partial skeleton diagram of a planetary gear mechanism constituting a conventional power transmission device.
FIG. 7 is a partial cross-sectional view of a conventional planetary gear mechanism.
FIG. 8 is a diagram illustrating a relationship between a swash plate position and a vehicle speed of the continuously variable transmission in the work vehicle.
FIG. 9 is a diagram illustrating a relationship between a power loss and a vehicle speed in the power transmission device of the work vehicle.

### DETAILED DESCRIPTION

### <Outline of embodiments of the present disclosure>

Hereinafter, an outline of embodiments of the present disclosure will be listed and described.
(1) A power transmission device for a work vehicle of the present embodiment includes a transmission including an input shaft rotationally driven by a prime mover, a first gear mechanism and a second gear mechanism driven by the input shaft, a continuously variable transmission including a hydraulic pump driven by the first gear mechanism and a hydraulic motor driven by the hydraulic pump, a planetary gear mechanism driven by the second gear mechanism and the hydraulic motor, and a plurality of transmission gears to which an output of the planetary gear mechanism is transmitted. The plurality of transmission gears includes a first transmission gear corresponding to a first speed range which is the lowest speed side, a second transmission gear corresponding to a second speed range which is a higher speed side than the first speed range, a third transmission gear corresponding to a third speed range which is a higher speed side than the second speed range, and a fourth transmission gear corresponding to a fourth speed range which is the highest speed side. The planetary gear mechanism includes a first planetary gear mechanism and a second planetary gear mechanism coaxial with the input shaft and provided side by side in an axial direction of the input shaft. The first planetary gear mechanism and the second planetary gear mechanism have a common planetary carrier. The first planetary gear mechanism includes a first ring gear driven by the second gear mechanism, a first sun gear driven by the hydraulic motor, and a first planetary gear that meshes with the first ring gear and the first sun gear. The second planetary gear mechanism includes a second ring gear that transmits rotation to the first transmission gear, a second sun gear that transmits rotation to the second transmission gear and the fourth transmission gear, and a second planetary gear that meshes with the second ring gear, the second sun gear, and the first planetary gear. The first planetary gear includes an extension portion extending to the second planetary gear mechanism in the axial direction, and includes a third planetary gear that meshes with the second planetary gear in the extension portion. The planetary carrier rotatably supports the first planetary gear and the second planetary gear, and transmits rotation to the third transmission gear. In the power transmission device for a work vehicle according to the present disclosure, an outer diameter dimension of the first sun gear is larger than an outer diameter dimension of the second sun gear, and an inner diameter dimension of the second ring gear is larger than an inner diameter dimension of the first ring gear.

In the power transmission device for a work vehicle according to the present embodiment, the inner diameter dimension of the second ring gear is increased as compared with the inner diameter dimension of the first ring gear. In this case, the inner diameter dimension of the second ring gear can be further increased. In the power transmission device for a work vehicle according to the present embodiment, the outer diameter dimension of the first sun gear is increased as compared with the outer diameter dimension of the second sun gear. In this case, the outer diameter dimension of the first sun gear can be further reduced. In the power transmission device for a work vehicle having such a configuration, the reduction ratio in the first speed range can be increased and the reduction ratio in the fourth speed range can be reduced. As a result, the maximum traction force in the case of selecting the first speed range and traveling at a low speed can be improved and the power loss in the case of selecting the fourth speed range and traveling at a high speed can be reduced. In the power transmission device for a work vehicle of the present embodiment, the power loss during high-speed traveling can be reduced.

(2) In the power transmission device for a work vehicle according to (1), the continuously variable transmission further includes a swash plate, and a rotation speed and a rotation direction of the hydraulic motor can be changed according to an angle of the swash plate, and an output at which a work vehicle can travel at a maximum speed is reached in a state where the angle of the swash plate is in a neutral region.

In the power transmission device for a work vehicle of the present embodiment, the work vehicle can be made to travel at the maximum speed in the case where the angle of the swash plate of the continuously variable transmission is set to the neutral region. Therefore, according to the power transmission device of the present embodiment, the power loss during high-speed traveling can be reduced. In addition, in this case, by selecting the fourth speed range in a state where the angle of the swash plate is set to the neutral region, it is possible to travel at the maximum speed.

(3) The power transmission device for a work vehicle according to (1) or (2) further includes: an output shaft rotationally driven by the planetary gear mechanism; and a clutch mechanism that engages any one of the first transmission gear, the second transmission gear, the third transmission gear, and the fourth transmission gear with the output shaft.

In the power transmission device for a work vehicle of the present embodiment, any one of the first speed range to the fourth speed range can be selected as a gear position by the clutch mechanism.

(4) In the power transmission device for a work vehicle according to any one of (1) to (3), the second sun gear has a smaller number of teeth than the first sun gear.

In the power transmission device for a work vehicle of the present embodiment, the reduction ratio in the fourth speed range can be reduced by further reducing the number of teeth of the second sun gear. By reducing the reduction ratio in the fourth speed range, a decrease in speed of the work vehicle can be suppressed, and it is possible to travel at the maximum speed in a state where the position of the swash plate is in the neutral region. As a result, the power loss can be reduced in the case of selecting the fourth speed range and traveling at a high speed.

(5) In the power transmission device for a work vehicle according to any one of (1) to (4), the second ring gear has a larger number of teeth than the first ring gear.

In the power transmission device for a work vehicle of the present embodiment, by increasing the number of teeth of the second ring gear, it is possible to dispose a meshing portion between the second planetary gear and the third planetary gear inside the second ring gear, and thus the number of teeth of the first sun gear can be increased. By increasing the number of teeth of the first sun gear, the reduction ratio of the second sun gear can be further reduced, so that the reduction ratio between the continuously variable transmission and the first sun gear can be increased as compared with the conventional power transmission device. In this case, the torque input to the first sun gear can be increased. As a result, the maximum traction force in the case of selecting the first speed range and traveling at a low speed can be improved.

(6) In the power transmission device for a work vehicle according to any one of (1) to (5), a gear ratio of the second sun gear with respect to the first sun gear is less than 1.0, and a gear ratio of the second ring gear with respect to the first ring gear exceeds 1.0.

In the power transmission device for a work vehicle of the present embodiment, the reduction ratio in the fourth speed range is reduced, and the reduction ratio in the first speed range is increased. As a result, the power loss in the case of selecting the fourth speed range and traveling at a high speed can be reduced, and the maximum traction force in the case of selecting the first speed range and traveling at a low speed can be improved.

(7) A work vehicle of the present embodiment includes the power transmission device according to any one of (1) to (6).

The work vehicle of the present embodiment can reduce the power loss during high-speed traveling.

### <Details of embodiments of the present disclosure>

Hereinafter, embodiments of the present disclosure will be described in detail with reference to the drawings. Note that at least some of the embodiments described below may be arbitrarily combined.

### [Work vehicle]

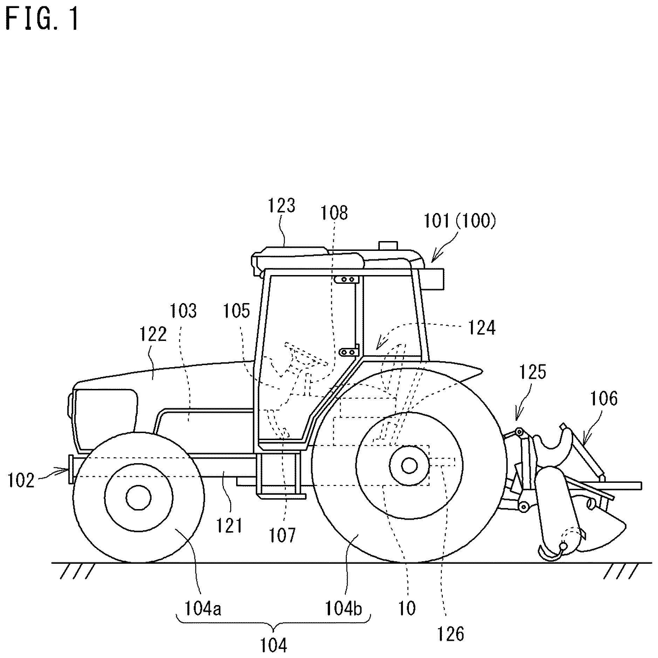

FIG. 1 is a side view illustrating an example of a work vehicle. FIG. 1 illustrates a work vehicle 100 which is an example of a work vehicle including the power transmission device of the present disclosure. The work vehicle 100 illustrated in FIG. 1 is a tractor 101 and is a vehicle for agricultural work. The tractor 101 includes a vehicle body 102, a prime mover (engine) 103, a traveling device 104, a steering device 105, and a work device 106. In the tractor 101, the work device 106 is coupled to the vehicle body 102. The tractor 101 travels in a work place such as a field, and the work device 106 works on the work place.

The vehicle body 102 includes a chassis 121 serving as a frame of the vehicle, a body 122 serving as an exterior, a cabin 123, a driver's seat 124, and a coupling mechanism 125. The coupling mechanism 125 is mounted on a rear portion of the chassis 121, and couples the work device 106 to the chassis 121 (vehicle body 102).

The work vehicle 100 (tractor 101) further includes a shift pedal 107 and a shift lever 108 in the cabin 123. The tractor 101 can adjust a vehicle speed (traveling speed) of the work vehicle 100 (tractor 101) by a combination of operations of the shift pedal 107 and the shift lever 108.

The prime mover 103 is a power machine that generates traveling power of the tractor 101. The tractor 101 travels by driving wheels of the traveling device 104 driven by the prime mover 103. The prime mover 103 of the present embodiment is a diesel engine. Note that, the prime mover 103 may be an electric motor, or may be a combination of an engine and an electric motor.

The traveling device 104 has front wheels 104a and rear wheels 104b. In the tractor 101 of the present embodiment, the front wheels 104a are steering wheels, and the traveling direction of the vehicle body 102 is changed by changing the rolling direction of the front wheels 104a by the steering device 105. The front wheels 104a and the rear wheels 104b may be a tire type or a crawler type.

### (Power transmission device)

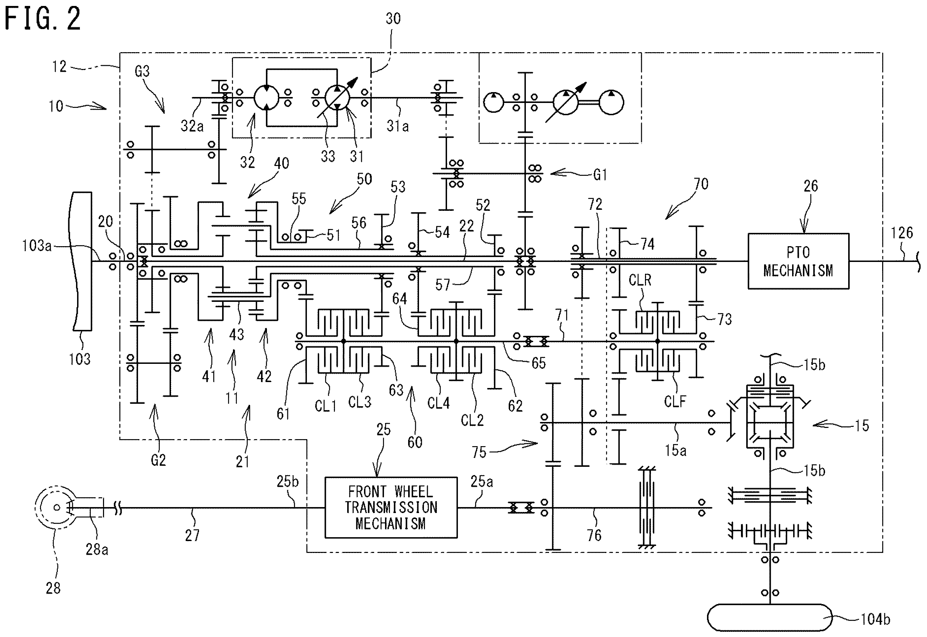

FIG. 2 is a skeleton diagram illustrating a power transmission device for a work vehicle. As illustrated in FIG. 1, the tractor 101 further includes a power transmission device 10. The power transmission device 10 transmits power from the prime mover 103 to the front wheels 104a, the rear wheels 104b, the work device 106, and the like during traveling of the tractor 101. The power transmission device 10 is supported by the chassis 121 and is mounted on the vehicle body 102. Note that the work vehicle 100 to which the power transmission device 10 of the present disclosure is applied is not limited to the tractor 101, and may be another work vehicle (for example, a combine harvester or the like).

### (Transmission)

As illustrated in FIG. 2, the power transmission device 10 includes a transmission 11. The transmission 11 shifts and transmits the power from the prime mover 103. The transmission 11 is housed in a transmission case 12. The transmission 11 includes an input shaft 20, a continuously variable transmission 30, a planetary gear mechanism 40, a transmission gear 50, a clutch mechanism 60, and a forward-reverse switching mechanism 70.

Note that the power transmission device 10 further includes a rear wheel differential mechanism 15, a front wheel transmission mechanism 25, and a PTO mechanism 26. The rear wheel differential mechanism 15 transmits the power from the transmission 11 to the rear wheels 104b. The front wheel transmission mechanism 25 transmits the power from the transmission 11 to the front wheels 104a. The PTO mechanism 26 transmits power from the transmission 11 to a PTO shaft 126.

Note that, in the following description, the connection side with the prime mover 103 in the axial direction of the input shaft 20 is defined as a front side of the power transmission device 10, and the opposite side is defined as a rear side. In the following description, the front side is also referred to as one side in the axial direction, and the rear side is also referred to as the other side in the axial direction.

In the transmission 11, the input shaft 20 is coupled to an output shaft 103a of the prime mover 103. The power from the prime mover 103 is input to the input shaft 20 via the output shaft 103a. The transmission 11 includes a rotation shaft 22 coupled to a rear end of the input shaft 20.

### (Transmission unit)

The transmission 11 includes a transmission unit 21 that shifts and outputs the power (rotation) input to the input shaft 20 and the rotation shaft 22. As illustrated in FIG. 2, the transmission unit 21 includes the continuously variable transmission 30, the planetary gear mechanism 40, and the clutch mechanism 60. In the transmission unit 21, the power from the input shaft 20 is input to the continuously variable transmission 30, and the power from the input shaft 20 and the output from the continuously variable transmission 30 are input to the planetary gear mechanism 40. The clutch mechanism 60 selects a gear position (speed range) for the output from the planetary gear mechanism 40.

### (Continuously variable transmission)

The continuously variable transmission 30 of the present embodiment is a hydrostatic continuously variable transmission called HST (hydraulic static transmission). The continuously variable transmission 30 includes a hydraulic pump 31 and a hydraulic motor 32. The hydraulic pump 31 is a variable displacement hydraulic pump and has a swash plate 33. The hydraulic motor 32 is driven by hydraulic oil supplied from the hydraulic pump 31. In the continuously variable transmission 30, a pump shaft 31a of the hydraulic pump 31 is coupled to the input shaft 20 via a first gear mechanism G1. By changing the angle of the swash plate 33 (hereinafter, also referred to as a swash plate position) of the hydraulic pump 31, the continuously variable transmission 30 switches the rotation direction of the power from the input shaft 20 to a forward rotation side or a reverse rotation side and continuously changes the rotation speed of the power, and outputs the power from the motor shaft 32a of the hydraulic motor 32.

In the continuously variable transmission 30, the swash plate 33 is configured to be rotatable by a predetermined angle (A°) to a forward side f and to be rotatable by a predetermined angle (A°) to a reverse side r with reference to a neutral position (neutral) N where a rotation angle of the swash plate 33 is 0°. In the present embodiment, the angle of the swash plate 33 is expressed as a swash plate position (unit:%). For example, the swash plate position of a case where the swash plate 33 is rotated by a° from the neutral position N to the forward side f (case where the rotation angle is a°) is calculated by an expression of a/A × 100 (%). In addition, the swash plate position of a case where the swash plate 33 is rotated by a° from the neutral position N to the reverse side r (when the rotation angle is -a°) is calculated by an expression of -a/A × 100 (%). In other words, in the present embodiment, the swash plate position of the swash plate 33 is expressed as a ratio of an actual rotation angle of the swash plate 33 to a range of angles (+A° to -A°) in which the swash plate 33 can rotate.

In a case where the swash plate position of the swash plate 33 is the neutral position N (swash plate position 0% (that is, the rotation angle is 0°)), the power (rotation) output from the motor shaft 32a is "0". In the present description, a region in a predetermined range including the neutral position N among the swash plate positions of the swash plate 33 is referred to as a "neutral region". In the continuously variable transmission 30 of the present embodiment, the neutral region is a swash plate position within a range of 20 (%) from the neutral position N to the forward side f and within 20 (%) to the reverse side r.

### (Planetary gear mechanism)

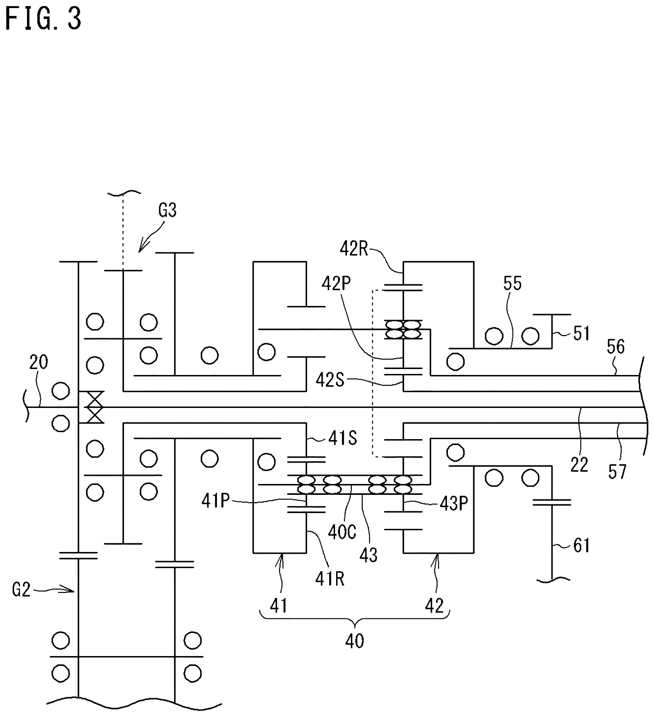

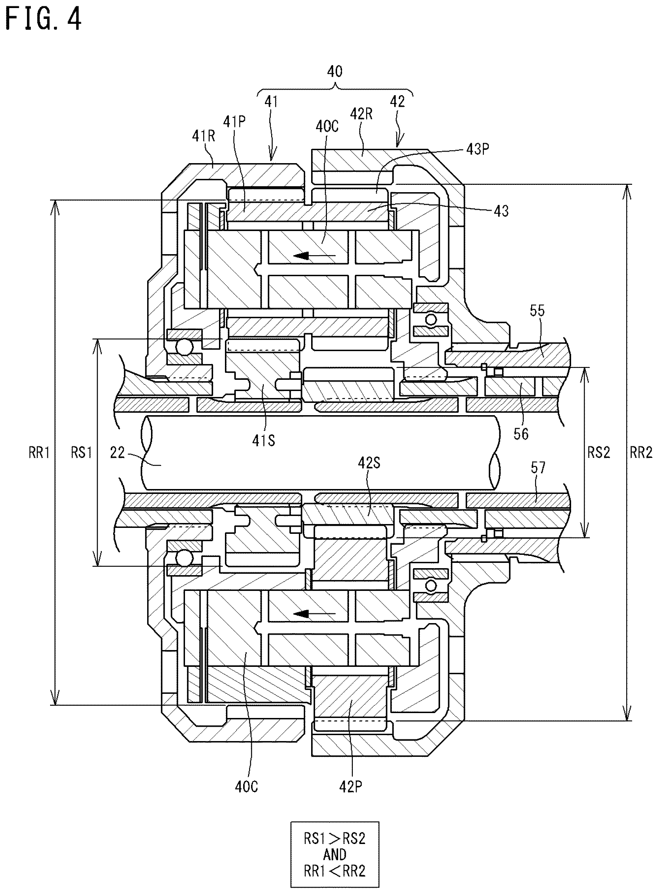

FIG. 3 is a partially enlarged skeleton diagram of the planetary gear mechanism in FIG. 2. FIG. 4 is a partial cross-sectional view of the planetary gear mechanism. The power (rotation) from the input shaft 20 and the output of the continuously variable transmission 30 are input to the planetary gear mechanism 40, and these are synthesized and output from the planetary gear mechanism 40. As illustrated in FIG. 2 to FIG. 4, the planetary gear mechanism 40 includes a first planetary gear mechanism 41 and a second planetary gear mechanism 42 provided side by side in the axial direction of the input shaft 20. In other words, the planetary gear mechanism 40 is a so-called complex planetary gear mechanism. The first planetary gear mechanism 41 is disposed on one side (front side) in the axial direction, and the second planetary gear mechanism 42 is disposed on the other side (rear side) in the axial direction. In the planetary gear mechanism 40, the first planetary gear mechanism 41 functions as a power input unit, and the second planetary gear mechanism 42 functions as a power output unit.

As illustrated in FIG. 2 to FIG. 4, the first planetary gear mechanism 41 includes a first ring gear 41R, a first sun gear 41S, and a first planetary gear 41P. The second planetary gear mechanism 42 includes a second ring gear 42R, a second sun gear 42S, and a second planetary gear 42P.

The planetary gear mechanism 40 further includes a planetary carrier 40C provided over the first planetary gear mechanism 41 and the second planetary gear mechanism 42 in the axial direction of the rotation shaft 22 (input shaft 20). The planetary carrier 40C rotatably supports the first planetary gear 41P and the second planetary gear 42P.

In the first planetary gear mechanism 41, the first planetary gear 41P meshes with the first sun gear 41S and the first ring gear 41R, revolves orbitally around the rotation shaft 22, and rotates about the axis of the first planetary gear 41P itself.

In the first planetary gear mechanism 41, the first planetary gear 41P includes an extension portion 43 extending to the other side in the axial direction up to a position where the second planetary gear mechanism 42 exists. The first planetary gear 41P includes a third planetary gear 43P in the extension portion 43. The third planetary gear 43P meshes with the second planetary gear 42P of the second planetary gear mechanism 42 (see the dotted line in FIG. 3).

In the second planetary gear mechanism 42, the second planetary gear 42P meshes with the second sun gear 42S and the second ring gear 42R, revolves orbitally around the rotation shaft 22, and rotates about the axis of the second planetary gear 42P itself. As described above, the second planetary gear 42P further meshes with the third planetary gear 43P.

As illustrated in FIG. 2 and FIG. 3, the first sun gear 41S is coupled to the motor shaft 32a via a third gear mechanism G3. Therefore, in the planetary gear mechanism 40, the output from the continuously variable transmission 30 is transmitted to the first sun gear 41S of the first planetary gear mechanism 41.

In addition, the first ring gear 41R is coupled to the input shaft 20 via the second gear mechanism G2. Therefore, in the planetary gear mechanism 40, the power from the input shaft 20 is transmitted to the first ring gear 41R of the first planetary gear mechanism 41.

The first planetary gear mechanism 41 synthesizes the power input to the first sun gear 41S and the first ring gear 41R. The first planetary gear mechanism 41 transmits the synthesized power to the second planetary gear mechanism 42 via the first planetary gear 41P and the third planetary gear 43P.

In the second planetary gear mechanism 42, the power synthesized by the first planetary gear mechanism 41 is input to the second sun gear 42S and the second ring gear 42R via the third planetary gear 43P. The second planetary gear mechanism 42 outputs the input power from any one of the second sun gear 42S, the second ring gear 42R, and the planetary carrier 40C.

In the planetary gear mechanism 40, the power output from the second planetary gear mechanism 42 is power obtained by synthesizing the power from the input shaft 20 and the power from the continuously variable transmission 30.

Note that, as illustrated in FIG. 4, the planetary gear mechanism 40 includes an oil passage 45. The oil passage 45 supplies lubricating oil to each unit of the planetary gear mechanism 40. In the power transmission device 10 of the present disclosure, the lubricating oil is supplied from the other side (rear side) in the axial direction to one side (front side) in the axial direction by the oil passage 45 in the planetary gear mechanism 40.

### (Clutch mechanism)

As illustrated in FIG. 2, the clutch mechanism 60 includes a first transmission shaft 55, a second transmission shaft 56, a third transmission shaft 57, an output shaft 65, a first clutch CL1, a second clutch CL2, a third clutch CL3, and a fourth clutch CL4. The first transmission shaft 55, the second transmission shaft 56, and the third transmission shaft 57 are disposed coaxially with each other, and have a triple shaft structure. The output shaft 65 is disposed in parallel with the transmission shafts 55,56, and 57.

The clutch mechanism 60 selects any one of the four clutches CL1 to CL4, and outputs the output from the planetary gear mechanism 40 in four speed ranges. The first clutch CL1 corresponds to a first-stage speed range (hereinafter, referred to as a first speed range), the second clutch CL2 corresponds to a second-stage speed range (hereinafter, referred to as a second speed range), the third clutch CL3 corresponds to a third-stage speed range (hereinafter, referred to as a third speed range), and the fourth clutch CL4 corresponds to a fourth-stage speed range (hereinafter, referred to as a fourth speed range). In the power transmission device 10 of the present disclosure, the first speed range is a speed range on the lowest speed side, the second speed range is a speed range on a higher speed side than the first speed range, the third speed range is a speed range on a higher speed side than the second speed range, and the fourth speed range is a speed range on the highest speed side. In a case where the fourth speed range is selected, the tractor 101 (see FIG. 1) can travel at the maximum speed in the design specification.

In the clutch mechanism 60, the first transmission shaft 55 is coupled to the second ring gear 42R, the second transmission shaft 56 is coupled to the planetary carrier 40C, and the third transmission shaft 57 is coupled to the second sun gear 42S.

The transmission gear 50 includes a plurality of gears, and includes a first transmission gear 51, a second transmission gear 52, a third transmission gear 53, and a fourth transmission gear 54. The first transmission gear 51 is provided coaxially with the first transmission shaft 55. The first transmission gear 51 is coupled to the output shaft 65 of the clutch mechanism 60 via the first range gear 61 and the first clutch CL1. The second transmission gear 52 is provided coaxially with the third transmission shaft 57. The second transmission gear 52 is coupled to the output shaft 65 of the clutch mechanism 60 via the second range gear 62 and the second clutch CL2. The third transmission gear 53 is provided coaxially with the second transmission shaft 56. The third transmission gear 53 is coupled to the output shaft 65 of the clutch mechanism 60 via the third range gear 63 and the third clutch CL3. The fourth transmission gear 54 is provided coaxially with the third transmission shaft 57. The fourth transmission gear 54 is coupled to the output shaft 65 of the clutch mechanism 60 via the fourth range gear 64 and the fourth clutch CL4.

### (Switching of speed range in transmission unit)

Here, a power transmission situation in the transmission unit 21 will be described with reference to FIG. 2.

In the transmission unit 21, a part of the power from the prime mover 103 is input to the pump shaft 31a via the input shaft 20, the rotation shaft 22, and the first gear mechanism G1, is rotated forward or rearward by the continuously variable transmission 30, and is shifted and output from the motor shaft 32a. The power output from the motor shaft 32a is further input to the first sun gear 41S of the first planetary gear mechanism 41 via the third gear mechanism G3.

In the transmission unit 21, the remaining power (power other than the part of the power described above) from the prime mover 103 is input to the first ring gear 41R of the first planetary gear mechanism 41 via the input shaft 20 and the second gear mechanism G2.

The transmission unit 21 synthesizes the power from the continuously variable transmission 30 and the power from the prime mover 103 by the first planetary gear mechanism 41 and the second planetary gear mechanism 42. The power synthesized by the planetary gear mechanism 40 is transmitted to any one of the first transmission shaft 55, the second transmission shaft 56, and the third transmission shaft 57.

In a case where the first clutch CL1 is in an "on" state, the power from the planetary gear mechanism 40 is transmitted from the second ring gear 42R to the first transmission shaft 55, and is output from the output shaft 65 via the first transmission gear 51, the first range gear 61, and the first clutch CL1. In this case, the continuously variable transmission 30 and the planetary gear mechanism 40 output power in the first speed range.

In a case where the second clutch CL2 is in an "on" state, the power from the planetary gear mechanism 40 is transmitted from the second sun gear 42S to the third transmission shaft 57, and is output from the output shaft 65 via the second transmission gear 52, the second range gear 62, and the second clutch CL2. In this case, the continuously variable transmission 30 and the planetary gear mechanism 40 output power in the second speed range.

In a case where the third clutch CL3 is in an "on" state, the power from the planetary gear mechanism 40 is transmitted from the planetary carrier 40C to the second transmission shaft 56, and is output from the output shaft 65 via the third transmission gear 53, the third range gear 63, and the third clutch CL3. In this case, the continuously variable transmission 30 and the planetary gear mechanism 40 output power in the third speed range.

In a case where the fourth clutch CL4 is in an "on" state, the power from the planetary gear mechanism 40 is transmitted from the second sun gear 42S to the third transmission shaft 57, and is output from the output shaft 65 via the fourth transmission gear 54, the fourth range gear 64, and the fourth clutch CL4. In this case, the continuously variable transmission 30 and the planetary gear mechanism 40 output power in the fourth speed range.

As described above, the power transmission device 10 of the present embodiment includes the output shaft 65 rotationally driven by the planetary gear mechanism 40, and the clutch mechanism 60 that engages any one of the first transmission gear 51, the second transmission gear 52, the third transmission gear 53, and the fourth transmission gear 54 with the output shaft 65. According to the power transmission device 10 having such a configuration, any one of the first speed range to the fourth speed range can be selected as a gear position.

### (Forward-reverse switching mechanism)

The forward-reverse switching mechanism 70 switches the power from the planetary gear mechanism 40 to power on the forward side or power on the reverse side and outputs the power. As illustrated in FIG. 2, the forward-reverse switching mechanism 70 includes an input shaft 71 coupled to the output shaft 65 of the clutch mechanism 60 and an output shaft 72 disposed in parallel with the input shaft 71. The forward-reverse switching mechanism 70 further includes a forward clutch CLF and a reverse clutch CLR provided on the input shaft 71. The forward clutch CLF is coupled to the output shaft 72 via a forward gear mechanism 73. The reverse clutch CLR is coupled to the output shaft 72 via a reverse gear mechanism 74.

When the forward clutch CLF is in an "on" state, the input shaft 71 is coupled to the forward gear mechanism 73. At this time, the power from the input shaft 71 is transmitted to the output shaft 72 via the forward gear mechanism 73. In this case, the work vehicle 100 can move forward. When the reverse clutch CLR is in an "on" state, the input shaft 71 is coupled to the reverse gear mechanism 74. At this time, the power from the input shaft 71 is transmitted to the output shaft 72 via the reverse gear mechanism 74. In this case, the work vehicle 100 can move reversely.

In the forward-reverse switching mechanism 70, the output of the planetary gear mechanism 40 is input to the input shaft 71 via the clutch mechanism 60. When the forward clutch CLF is in the "on" state, the power of the input shaft 71 is converted into forward power by the forward clutch CLF and the forward gear mechanism 73, and is transmitted to the output shaft 72. When the reverse clutch CLR is in the "on" state, the power of the input shaft 71 is converted into reverse power by the reverse clutch CLR and the reverse gear mechanism 74, and is transmitted to the output shaft 72.

The forward-reverse switching mechanism 70 further includes a gear mechanism 75. The gear mechanism 75 transmits the power from the forward-reverse switching mechanism 70 to the rear wheel differential mechanism 15 and the front wheel transmission mechanism 25. The forward power and the reverse power from the output shaft 72 are transmitted to the rear wheel differential mechanism 15 and the front wheel transmission mechanism 25 by the gear mechanism 75.

### (Rear wheel differential mechanism)

As illustrated in FIG. 2, the rear wheel differential mechanism 15 includes an input shaft 15a and output shafts 15b. In the rear wheel differential mechanism 15, power on the forward side or the reverse side from the output shaft 72 is transmitted to the input shaft 15a. The rear wheel differential mechanism 15 transmits the power transmitted to the input shaft 15a to the left and right rear wheels 104b via the left and right output shafts 15b.

### (Front wheel transmission mechanism)

As illustrated in FIG. 2, the front wheel transmission mechanism 25 includes an input shaft 25a coupled to the output shaft 76 of the gear mechanism 75 and an output shaft 25b located in parallel with the input shaft 25a. The front wheel transmission mechanism 25 transmits the power transmitted to the input shaft 25a to the output shaft 25b via a constant velocity clutch (not illustrated) or the like. The output shaft 25b is coupled to an input shaft 28a of the front wheel differential mechanism 28 via a rotation shaft 27. The front wheel transmission mechanism 25 transmits the power transmitted to the output shaft 25b to the front wheel differential mechanism 28 (input shaft 28a) via the rotation shaft 27.

### (Control device)

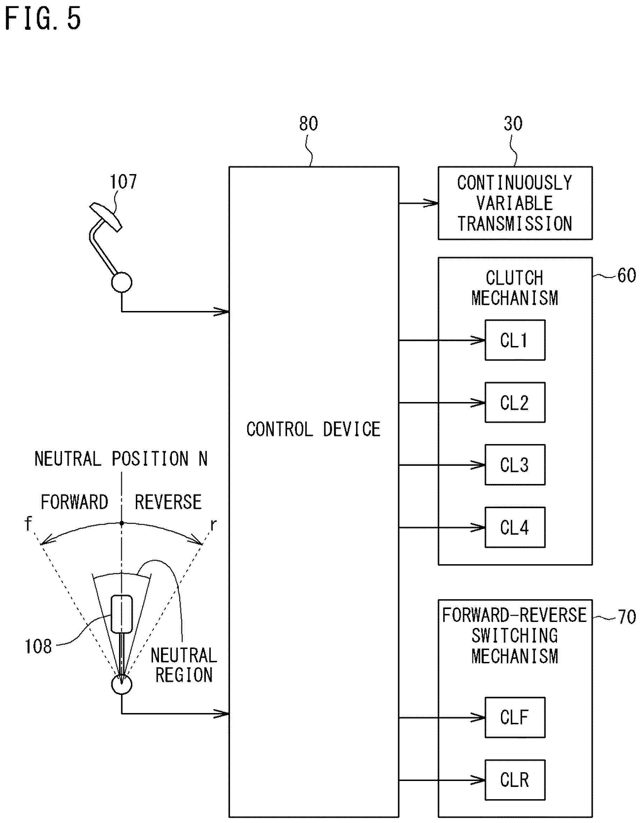

FIG. 5 is a control block diagram of the power transmission device. As illustrated in FIG. 5, the work vehicle 100 (tractor 101) of the present embodiment further includes a control device 80. In the work vehicle 100 (tractor 101) of the present disclosure, a shift operation by a driver is performed using the shift pedal 107 and the shift lever 108 in the cabin 123.

The control device 80 is connected to the shift pedal 107 and the shift lever 108, and receives an operation signal related to an operation amount of each of the units 107 and 108. Based on the operation signals input from the shift pedal 107 and the shift lever 108, the control device 80 outputs signals for controlling these operations to the continuously variable transmission 30, the clutch mechanism 60, and the forward-reverse switching mechanism 70.

The control device 80 outputs a signal for controlling the angle of the swash plate 33 (swash plate position) to the continuously variable transmission 30. The control device 80 outputs a signal for turning on (connecting) or off (disconnecting) each clutch (first clutch CL1, second clutch CL2, third clutch CL3, and fourth clutch CL4) to the clutch mechanism 60. The control device 80 outputs a signal for turning on (connecting) or off (disconnecting) each clutch (forward clutch CLF and reverse clutch CLR) to the forward-reverse switching mechanism 70.

### (Conventional planetary gear mechanism)

Here, a conventional planetary gear mechanism will be described.

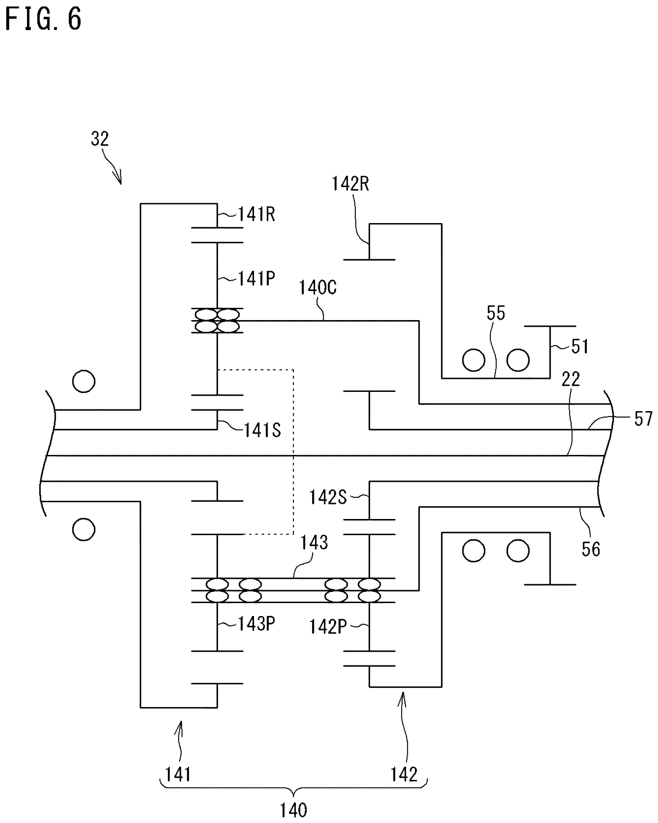

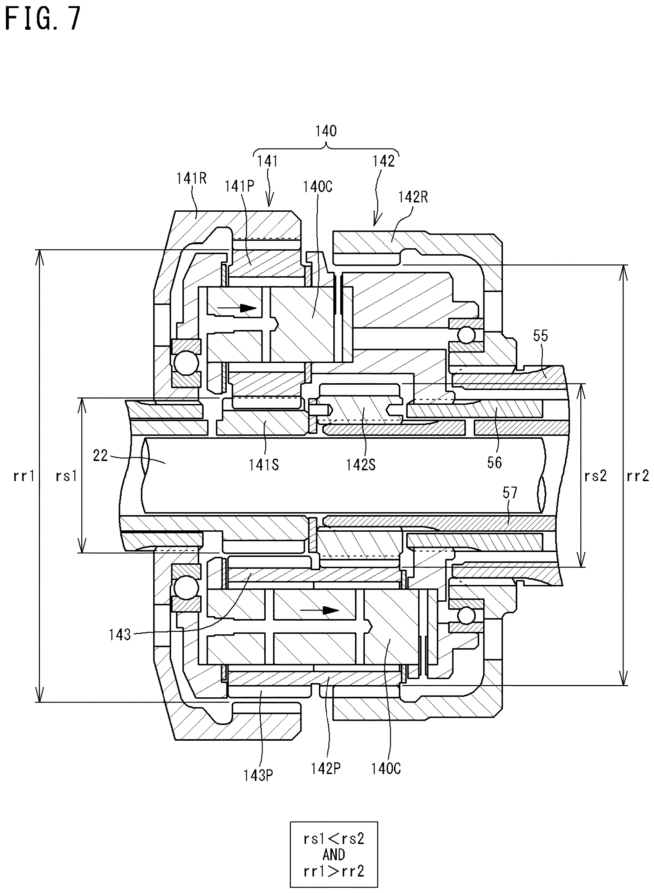

FIG. 6 is a partial skeleton diagram of the planetary gear mechanism constituting a conventional power transmission device. FIG. 7 is a partial cross-sectional view of the conventional planetary gear mechanism. FIG. 6 and FIG. 7 illustrate a conventional planetary gear mechanism 140. The conventional planetary gear mechanism 140 is an example of a planetary gear mechanism constituting the conventional power transmission device (not illustrated). In the following description, the conventional planetary gear mechanism 140 is also referred to as a power transmission device according to a "comparative example".

As shown in FIG. 6 and FIG. 7, the conventional planetary gear mechanism 140 is a mechanism to which the power (rotation) of the input shaft 20 and the output of the continuously variable transmission 30 are input and which synthesizes and outputs the power and the output, similarly to the planetary gear mechanism 40 of the present embodiment (see FIG. 5). The planetary gear mechanism 140 includes a first planetary gear mechanism 141 and a second planetary gear mechanism 142 provided side by side in the axial direction of the input shaft 20. Note that, here, the configuration of each unit (for example, the input shaft 20, the rotation shaft 22, the transmission gear 50, the clutch mechanism 60, and the like) connected to one side in the axial direction and the other side in the axial direction of the planetary gear mechanism 140 will be described as being common to the planetary gear mechanism 40 (see FIG. 3 and FIG. 4).

The first planetary gear mechanism 141 includes a first ring gear 141R, a first sun gear 141S, and a first planetary gear 141P. The second planetary gear mechanism 142 includes a second ring gear 142R, a second sun gear 142S, and a second planetary gear 142P. The planetary gear mechanism 140 includes a planetary carrier 140C provided over the first planetary gear mechanism 41 and the second planetary gear mechanism 42 in the axial direction of the input shaft 20. The planetary carrier 140C rotatably supports the first planetary gear 141P and the second planetary gear 142P.

In the first planetary gear mechanism 141, the first planetary gear 141P meshes with the first sun gear 141S and the first ring gear 141R, revolves orbitally around the input shaft 20, and rotates about the axis of the first planetary gear 141P itself.

In the second planetary gear mechanism 142, the second planetary gear 142P meshes with the second sun gear 142S and the second ring gear 142R, revolves orbitally around the input shaft 20, and rotates about the axis of the second planetary gear 142P itself.

In the second planetary gear mechanism 142, the second planetary gear 142P further includes an extension portion 143 extending to one side in the axial direction up to a position where the first planetary gear mechanism 141 exists. The second planetary gear 142P includes a third planetary gear 143P in the extension portion 143. The third planetary gear 143P meshes with the first planetary gear 141P of the first planetary gear mechanism 141 (see the dotted line in FIG. 6).

The conventional planetary gear mechanism 140 configured as described above can transmit the power transmitted to the first planetary gear 141P to the second planetary gear 142P by meshing the first planetary gear 141P with the third planetary gear 143P in the first planetary gear mechanism 141 on one side in the axial direction.

As illustrated in FIG. 7, the conventional planetary gear mechanism 140 includes an oil passage 145. The oil passage 145 supplies lubricating oil to each unit of the planetary gear mechanism 140. In the conventional planetary gear mechanism 140, the lubricating oil is supplied from one side (front side) in the axial direction to the other side (rear side) in the axial direction by the oil passage 145.

### (Comparison of diameters of sun gear and ring gear)

As illustrated in FIG. 7, in the conventional planetary gear mechanism 140, the third planetary gear 143P is disposed on the first planetary gear mechanism 141 side (one side in the axial direction). In this case, an internal space of the planetary gear mechanism 140 is restricted by the restriction of the size of the planetary gear mechanism 140 itself. Therefore, the planetary gear mechanism 140 has to reduce an outer diameter dimension rs1 of the first sun gear 141S. As a result, in the conventional planetary gear mechanism 140, the outer diameter dimension rs1 of the first sun gear 141S is smaller than an outer diameter dimension rs2 of the second sun gear 142S (rs1 < rs2).

Furthermore, in this case, the conventional planetary gear mechanism 140 further has to increase an inner diameter dimension rr1 of the first ring gear 141R in the first planetary gear mechanism 141 due to the restriction of the internal space. As a result, in the conventional planetary gear mechanism 140, the inner diameter dimension rr1 of the first ring gear 141R is larger than an inner diameter dimension rr2 of the second ring gear 142R (rr1 > rr2).

In other words, in the planetary gear mechanism 140 in which the third planetary gear 143P is disposed on the first planetary gear mechanism 141 side (one side in the axial direction), the outer diameter dimension rs1 of the first sun gear 141S is smaller than the outer diameter dimension rs2 of the second sun gear 142S, and the inner diameter dimension rr1 of the first ring gear 141R is larger than the inner diameter dimension rr2 of the second ring gear 142R.

In the conventional planetary gear mechanism 140 having such a configuration, the outer diameter dimension rs2 of the second sun gear 142S tends to increase in diameter. Therefore, in the conventional planetary gear mechanism 140, the gear ratio of the fourth transmission gear 54 with respect to the second sun gear 142S is large. As a result, in the conventional power transmission device (not illustrated) including the planetary gear mechanism 140, it is difficult to increase the rotational speed of the power in the fourth speed range output from the fourth range gear 64 via the fourth transmission gear 54 and the fourth clutch CL4.

Furthermore, in the conventional planetary gear mechanism 140 having such a configuration, the inner diameter dimension rr2 of the second ring gear 142R tends to increase in diameter. Therefore, in the conventional planetary gear mechanism 140, the gear ratio of the first transmission gear 51 with respect to the second ring gear 142R is small. As a result, in the conventional power transmission device (not illustrated) including the planetary gear mechanism 140, it is difficult to increase the traction force of the power in the first speed range output from the first range gear 61 via the first transmission gear 51 and the first clutch CL1.

Meanwhile, in the planetary gear mechanism 40 of the present disclosure illustrated in FIG. 3 and FIG. 5, the third planetary gear 43P is provided on the second planetary gear mechanism 42 side. Therefore, in the planetary gear mechanism 40 of the present disclosure, an outer diameter dimension RS1 of the first sun gear 41S in the first planetary gear mechanism 41 can be made larger than that in the conventional planetary gear mechanism 140 (see the outer diameter dimension rs1 in FIG. 7). As a result, in the planetary gear mechanism 40 of the present disclosure, the outer diameter dimension RS1 of the first sun gear 41S is larger than an outer diameter dimension RS2 of the second sun gear 42S (RS1 > RS2).

Furthermore, in the planetary gear mechanism 40 in which the third planetary gear 43P is provided on the second planetary gear mechanism 42 side, an inner diameter dimension RR1 of the first ring gear 41R in the first planetary gear mechanism 41 can be made smaller than that in the conventional planetary gear mechanism 140 (see the inner diameter dimension rr1 in FIG. 7). As a result, in the planetary gear mechanism 40 of the present disclosure, the inner diameter dimension RR1 of the first ring gear 41R is smaller than an inner diameter dimension RR2 of the second ring gear 42R (RR1 < RR2).

In other words, in the planetary gear mechanism 40 of the present disclosure, the outer diameter dimension RS1 of the first sun gear 41S is larger than the outer diameter dimension RS2 of the second sun gear 42S, and the inner diameter dimension RR1 of the first ring gear 41R is smaller than the inner diameter dimension RR2 of the second ring gear 42R.

In the planetary gear mechanism 40 having such a configuration, the outer diameter dimension RS2 of the second sun gear 42S can be reduced as compared with the conventional planetary gear mechanism 140. Therefore, the power transmission device 10 including the planetary gear mechanism 40 can further increase the gear ratio of the fourth transmission gear 54 with respect to the second sun gear 42S. As a result, in the power transmission device 10 of the present disclosure, it is possible to increase the rotational speed of the power in the fourth speed range output from the fourth range gear 64 via the fourth transmission gear 54 and the fourth clutch CL4. Note that, in the present embodiment, in the comparison of the diameters of the first sun gear 41S and the second sun gear 42S, the outer diameter dimensions are compared with each other, but for example, reference circle diameters may be compared with each other.

Furthermore, in the planetary gear mechanism 40 having such a configuration, the inner diameter dimension RR2 of the second ring gear 42R can be made larger than that in the conventional planetary gear mechanism 140. Therefore, the power transmission device 10 including the planetary gear mechanism 40 can further reduce the gear ratio of the first transmission gear 51 with respect to the second ring gear 42R. As a result, in the power transmission device 10 of the present disclosure, it is possible to increase the traction force of the power in the first speed range output from the first range gear 61 via the first transmission gear 51 and the first clutch CL1. Note that, in the present embodiment, in the comparison of the diameters of the first ring gear 41R and the second ring gear 42R, the inner diameter dimensions are compared with each other, but for example, the reference circle diameters may be compared with each other.

### (Magnitude relationship of number of teeth of gear)

In the transmission 11 of the present embodiment, the magnitude relationship of the number of teeth of each gear constituting the planetary gear mechanism 40 is as follows.

In the planetary gear mechanism 40, the number of teeth of the first sun gear 41S is larger than the number of teeth of the second sun gear 42S, and the number of teeth of the first ring gear 41R is smaller than the number of teeth of the second ring gear 42R.

Therefore, in the power transmission device 10 of the present disclosure, the value of a gear ratio GR1 of the second sun gear 42S with respect to the first sun gear 41S is less than 1.0, and the value of a gear ratio GR2 of the second ring gear 42R with respect to the first ring gear 41R exceeds 1.0.

On the other hand, in the conventional planetary gear mechanism 140 illustrated in FIG. 6 and FIG. 7, the magnitude relationship of the number of teeth of each gear is as follows.

In the conventional planetary gear mechanism 140, the number of teeth of the first sun gear 141S is smaller than the number of teeth of the second sun gear 142S, and the number of teeth of the first ring gear 141R is larger than the number of teeth of the second ring gear 142R.

Therefore, in the conventional power transmission device, the value of the gear ratio GR1 of the second sun gear 142S with respect to the first sun gear 141S exceeds 1.0, and the value of the gear ratio GR2 of the second ring gear 142R with respect to the first ring gear 141R is less than 1.0.

As described above, in the power transmission device 10 of the present embodiment, the number of teeth of the second sun gear 42S is smaller than the number of teeth of the first sun gear 41S. Note that, in the conventional planetary gear mechanism 140, the number of teeth of the second sun gear 142S is larger than the number of teeth of the first sun gear 141S. In the power transmission device 10 having such a configuration, it is possible to further reduce the reduction ratio in the fourth speed range by further reducing the number of teeth of the second sun gear 42S. As a result, according to the power transmission device 10 of the present embodiment, the power loss can be reduced in the case of selecting the fourth speed range and traveling at a high speed.

In addition, in the power transmission device 10 of the present embodiment, the number of teeth of the second ring gear 42R is larger than the number of teeth of the first ring gear 41R. Note that, in the conventional planetary gear mechanism 140, the number of teeth of the second ring gear 142R is smaller than the number of teeth of the first ring gear 141R. In the power transmission device 10 having such a configuration, it is possible to increase the reduction ratio in the first speed range by further increasing the number of teeth of the second ring gear 42R. As a result, according to the power transmission device 10 of the present embodiment, the maximum traction force in the case of selecting the first speed range and traveling at a low speed can be improved.

Furthermore, in the power transmission device 10 of the present embodiment, the gear ratio of the second sun gear 42S with respect to the first sun gear 41S is less than 1.0, and the gear ratio of the second ring gear 42R with respect to the first ring gear 41R exceeds 1.0. Note that, in the conventional planetary gear mechanism 140, the gear ratio of the second sun gear 142S with respect to the first sun gear 141S exceeds 1.0, and the gear ratio of the second ring gear 142R with respect to the first ring gear 141R is less than 1.0. In the power transmission device 10 having such a configuration, the reduction ratio in the fourth speed range can be reduced and the reduction ratio in the first speed range can be increased. As a result, according to the power transmission device 10 of the present embodiment, the maximum traction force in the case of selecting the first speed range and traveling at a low speed can be improved and the power loss in the case of selecting the fourth speed range and traveling at a high speed can be reduced.

### (Maximum speed during traveling of work vehicle)

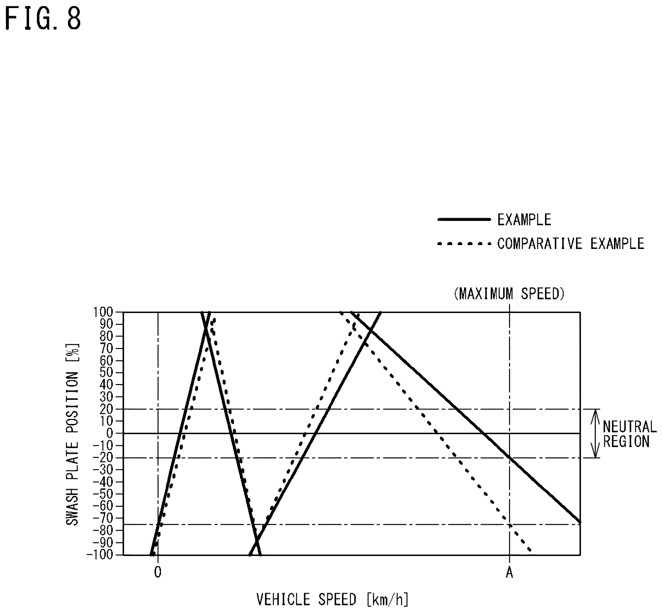

FIG. 8 is a diagram illustrating a relationship between a swash plate position and a vehicle speed of the continuously variable transmission in the work vehicle. FIG. 8 illustrates experimental results obtained by checking the relationship between the swash plate position of the swash plate 33 and the vehicle speed (traveling speed) of the tractor 101(hereinafter, also referred to as Example) including the power transmission device 10 including the planetary gear mechanism 40 and of the tractor (hereinafter, also referred to as Comparative Example) including the power transmission device including the conventional planetary gear mechanism 140. In each tractor used in this experiment, a desired maximum speed A in the fourth speed range is set. Note that the maximum speed A in this experiment is about 40 to 60 (km/h). In addition, in this experiment, the rotation speed of the prime mover (engine) 103 was set as the rated rotation speed.

As illustrated in FIG. 8, in the case of (Comparative Example), the desired maximum speed A in the fourth speed range was able to be obtained when the swash plate position of the swash plate 33 was 75 (%). On the other hand, in the case of (Example), the desired maximum speed A in the fourth speed range was able to be obtained in a state where the swash plate position of the swash plate 33 was in the neutral region.

As described above, the work vehicle 100 (tractor 101) of the present embodiment can achieve the desired maximum speed A in the fourth speed range in a state where the swash plate 33 is located in the neutral region. In addition, in other words, the work vehicle 100 can travel at a high speed with the swash plate position of the swash plate 33 as the neutral region.

In the power transmission device 10 of the present disclosure, the continuously variable transmission 30 includes the swash plate 33, and it is possible to change the rotation speed and the rotation direction of the hydraulic motor 32 according to the swash plate position of the swash plate 33. In the power transmission device 10 of the present disclosure, the planetary gear mechanism 40 is configured to maximize the rotation speed of the second sun gear 42S in a case where the swash plate position of the swash plate 33 is in the neutral region (the region of -20 (%) or more and +20 (%) or less) in a state where the fourth speed range is selected. At this time, the rotation speed of the fourth transmission gear 54 is also maximized, and the rotation speed of the fourth range gear 64 is also maximized. As a result, the work vehicle 100 (tractor 101) of the present embodiment can achieve the desired maximum speed A in a state where the swash plate position of the swash plate 33 is in the neutral region in the fourth speed range.

According to the power transmission device 10 of the present disclosure, at the time of selecting the fourth speed range and traveling at high speed, it is possible to travel at the maximum speed A by setting the swash plate position of the swash plate 33 to the neutral region. In a case where the swash plate 33 is located in the neutral region, the power loss of the continuously variable transmission 30 can be reduced. As a result, according to the power transmission device 10 of the present disclosure, the power loss during high-speed traveling can be reduced.

In the power transmission device 10 of the present disclosure, the reason why both the improvement of the maximum traction force and the traveling at the maximum speed in the swash plate neutral region can be achieved will be described.

In the planetary gear mechanism 40 of the present embodiment, the number of teeth of the second sun gear 42S is reduced in order to reduce the reduction ratio in the planetary gear mechanism 40. In the planetary gear mechanism 40 of the present embodiment, the number of teeth of the first sun gear 41S is increased in order to reduce the number of teeth of the second sun gear 42S. In other words, in the planetary gear mechanism 40 of the present embodiment, by increasing the number of teeth of the first sun gear 41S and reducing the number of teeth of the second sun gear 42S, the reduction ratio of the planetary gear mechanism 40 in the fourth speed range (and the second speed range) is reduced. Note that, in this case, the reduction ratio of the planetary gear mechanism 40 in the first speed range increases.

In addition, in the planetary gear mechanism 40 of the present embodiment, the reduction ratio between the continuously variable transmission 30 and the first sun gear 41S is made larger than the conventional planetary gear mechanism 140 by increasing the number of teeth of the first sun gear 41S. In this case, the torque input to the first sun gear 41S increases. Here, when the torque input to the first sun gear 41S increases, the reduction ratio in the first clutch CL1 to the fourth clutch CL4 increases, which causes a problem of causing a decrease in speed. In the planetary gear mechanism 40 of the present embodiment, by reducing the number of teeth of the second sun gear 42S, an increase in the reduction ratio of the first clutch CL1 to the fourth clutch CL4 is suppressed and a decrease in speed is suppressed, thereby realizing traveling at the maximum speed A in a state where the swash plate position of the swash plate 33 is in the neutral region. Note that, when the reduction ratio from the continuously variable transmission 30 to the first sun gear 41S is increased, the adjustment range of the rotation speed of each gear constituting the planetary gear mechanism 40 is reduced, and it becomes difficult to realize the continuously variable transmission. However, according to the planetary gear mechanism 40 of the present embodiment, the gear ratio at which the continuously variable transmission is established can be set.

In other words, as compared with the conventional planetary gear mechanism 140, the planetary gear mechanism 40 of the present embodiment has a configuration in which the magnitude relationship between the outer diameter dimensions of the first sun gear 41S and the second sun gear 42S and the magnitude relationship between the inner diameter dimensions of the first ring gear 41R and the second ring gear 42R are reversed, thereby achieving both improvement of the maximum traction force and traveling at the maximum speed A in a state where the swash plate position of the swash plate 33 is in the neutral region.

### [Output loss during traveling of work vehicle]

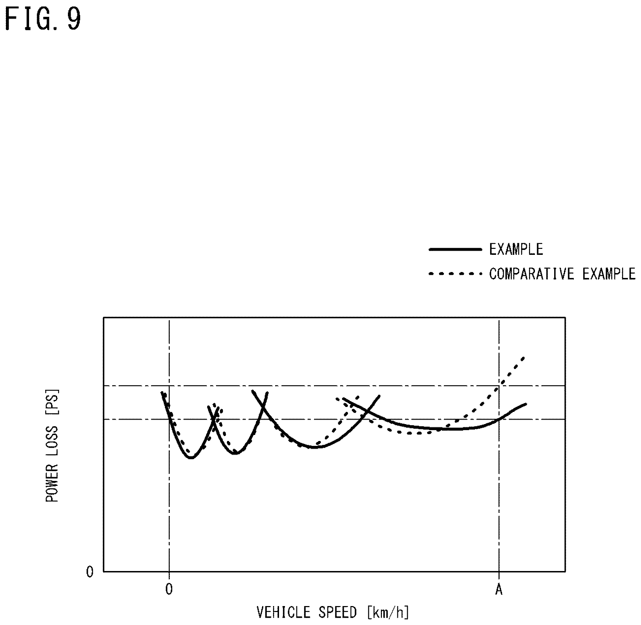

FIG. 9 is a diagram illustrating a relationship between a power loss and a vehicle speed in the power transmission device of the work vehicle. FIG. 9 illustrates experimental results obtained by checking the relationship between the vehicle speed and the power loss of the tractor 101 (Example) including the power transmission device 10 including the planetary gear mechanism 40 and of the tractor (Comparative Example) including the power transmission device (not illustrated) including the conventional planetary gear mechanism 140.

Comparing the power losses during traveling at the maximum speed A (fourth speed range) in (Example) and (Comparative Example), the power loss during traveling at the maximum speed A is reduced in the work vehicle 100 (tractor 101) according to (Example) as compared with the work vehicle according to (Comparative Example).

As the reason why the power loss can be reduced by the power transmission device 10 of the present disclosure, the following reasons are presumed.

The work vehicle 100 (tractor 101) according to (Example) can travel at a high speed at the maximum speed A in a state where the swash plate position of the swash plate 33 is set to the neutral region. In a case where the swash plate position of the swash plate 33 is in the neutral region, the power (rotation) output from the continuously variable transmission 30 is near "0". In this case, the planetary gear mechanism 40 has a larger ratio of power input from the input shaft 20 via the third gear mechanism G3 than power input from the continuously variable transmission 30 via the third gear mechanism G3. In the power transmission device 10, when the ratio of the power input to the planetary gear mechanism 40 via the continuously variable transmission 30 increases among the power input to the planetary gear mechanism 40, the power loss caused by frictional resistance increases. In the power transmission device 10 of the present disclosure, the swash plate position of the continuously variable transmission 30 can be set to the neutral region in a case where high-speed traveling is performed. Therefore, the work vehicle 100 including the power transmission device 10 of the present disclosure can reduce the ratio of the power input via the continuously variable transmission 30 during high-speed traveling, and thus the power loss can be reduced. As a result, by configuring the work vehicle 100 (tractor 101) according to (Example) such that the ratio of power input to the planetary gear mechanism 40 via the continuously variable transmission 30 is made smaller during traveling in the fourth speed range, the reduction in power loss during high-speed traveling is achieved.

As described above, the power transmission device 10 for the work vehicle 100 (tractor 101) of the present embodiment includes the transmission 11 including the input shaft 20 rotationally driven by the prime mover 103, the first gear mechanism G1 and the second gear mechanism G2 driven by the input shaft 20, the continuously variable transmission 30 including the hydraulic pump 31 driven by the first gear mechanism G1 and the hydraulic motor 32 driven by the hydraulic pump 31, the planetary gear mechanism 40 driven by the second gear mechanism G2 and the hydraulic motor 32, and the plurality of transmission gears 50 to which the output of the planetary gear mechanism 40 is transmitted. The plurality of transmission gears 50 include the first transmission gear 51 corresponding to the first speed range which is the lowest speed side, the second transmission gear 52 corresponding to the second speed range which is the higher speed side than the first speed range, the third transmission gear 53 corresponding to the third speed range which is the higher speed side than the second speed range, and the fourth transmission gear 54 corresponding to the fourth speed range which is the highest speed side. The planetary gear mechanism 40 includes the first planetary gear mechanism 41 and the second planetary gear mechanism 42 coaxial with the input shaft 20 and provided side by side in the axial direction of the input shaft 20. The first planetary gear mechanism 41 and the second planetary gear mechanism 42 have a common planetary carrier 40C. The first planetary gear mechanism 41 includes the first ring gear 41R driven by the second gear mechanism G2, the first sun gear 41S driven by the hydraulic motor 32, and the first planetary gear 41P that meshes with the first ring gear 41R and the first sun gear 41S. The second planetary gear mechanism 42 includes the second ring gear 42R that transmits rotation to the first transmission gear 51, the second sun gear 42S that transmits rotation to the second transmission gear 52 and the fourth transmission gear 54, and the second planetary gear 42P that meshes with the second ring gear 42R, the second sun gear 42S, and the first planetary gear 41P. The first planetary gear 41P includes the extension portion 43 extending to the second planetary gear mechanism 42 in the axial direction, and includes the third planetary gear 43P that meshes with the second planetary gear 42P in the extension portion 43. The planetary carrier 40C rotatably supports the first planetary gear 41P and the second planetary gear 42P, and transmits rotation to the third transmission gear 53. In the power transmission device 10 having such a configuration, the outer diameter dimension RS1 of the first sun gear 41S is larger than the outer diameter dimension RS2 of the second sun gear 42S (RS1 > RS2), and the inner diameter dimension RR2 of the second ring gear 42R is larger than the inner diameter dimension RR1 of the first ring gear 41R (RR2 > RR1).

In the power transmission device 10 for the work vehicle 100 (tractor 101) having such a configuration, the inner diameter dimension RR2 of the second ring gear 42R is larger than the inner diameter dimension RR1 of the first ring gear 41R. In this case, the inner diameter dimension RR2 of the second ring gear 42R can be further increased. Furthermore, in the power transmission device 10, the outer diameter dimension RS1 of the first sun gear 41S is larger than the outer diameter dimension RS2 of the second sun gear 42S. In this case, the outer diameter dimension RS1 of the first sun gear 41S can be further reduced. With such a configuration, in the power transmission device 10, the reduction ratio in the first speed range can be increased and the reduction ratio in the fourth speed range can be reduced.

According to the power transmission device 10 for the work vehicle 100 (tractor 101) having such a configuration, the maximum traction force in the case of selecting the first speed range and traveling at a low speed can be improved and the power loss in the case of selecting the fourth speed range and traveling at a high speed can be reduced.

The embodiments are illustrative in all respects and are not restrictive. The scope of the present invention is defined by the claims rather than the embodiments, and includes all modifications within the scope equivalent to the configurations described in the claims.

### REFERENCE SIGNS LIST

- 10: power transmission device
- 11: transmission
- 20: input shaft
- 30: continuously variable transmission
- 31: hydraulic pump
- 32: hydraulic motor
- 33: swash plate
- 40: planetary gear mechanism
- 40C: planetary carrier
- 41: first planetary gear mechanism
- 41S: first sun gear
- 41R: first ring gear
- 41P: first planetary gear
- 42: second planetary gear mechanism
- 42S: second sun gear
- 42R: second ring gear
- 42P: second planetary gear
- 43: extension portion
- 43P: third planetary gear
- 50: transmission gear
- 51: first transmission gear
- 52: second transmission gear
- 53: third transmission gear
- 54: fourth transmission gear
- 60: clutch mechanism
- 65: output shaft
- G1: first gear mechanism
- G2: second gear mechanism
- 100: work vehicle
- 101: tractor (work vehicle)
- RR1: inner diameter dimension (of first ring gear)
- RR2: inner diameter dimension (of second ring gear)
- RS1: outer diameter dimension (of first sun gear)
- RS2: outer diameter dimension (of second sun gear)

## Claims

1. A power transmission device (10) for a work vehicle (100) comprising a transmission (11) including
an input shaft (20) rotationally driven by a prime mover (103),
a first gear mechanism (G1) and a second gear mechanism (G2) driven by the input shaft (20),
a continuously variable transmission (30) including a hydraulic pump (31) driven by the first gear mechanism (G1) and a hydraulic motor (32) driven by the hydraulic pump (31),
a planetary gear mechanism (40) driven by the second gear mechanism (G2) and the hydraulic motor (32), and
a plurality of transmission gears (50) to which an output of the planetary gear mechanism (40) is transmitted,
wherein the plurality of transmission gears (50) includes a first transmission gear (51) corresponding to a first speed range which is a lowest speed side, a second transmission gear (52) corresponding to a second speed range which is a higher speed side than the first speed range, a third transmission gear (53) corresponding to a third speed range which is a higher speed side than the second speed range, and a fourth transmission gear (54) corresponding to a fourth speed range which is a highest speed side,
the planetary gear mechanism (40) includes a first planetary gear mechanism (41) and a second planetary gear mechanism (42) coaxial with the input shaft (20) and provided side by side in an axial direction of the input shaft (20),
the first planetary gear mechanism (41) and the second planetary gear mechanism (42) have a common planetary carrier (40C),
the first planetary gear mechanism (41) includes a first ring gear (41R) driven by the second gear mechanism (G2), a first sun gear (41S) driven by the hydraulic motor (32), and a first planetary gear (41P) that meshes with the first ring gear (41R) and the first sun gear (41S),
the second planetary gear mechanism (42) includes a second ring gear (42R) that transmits rotation to the first transmission gear (51), a second sun gear (42S) that transmits rotation to the second transmission gear (52) and the fourth transmission gear (54), and a second planetary gear (42P) that meshes with the second ring gear (42R), the second sun gear (42S), and the first planetary gear (41P),
the first planetary gear (41P) includes an extension portion (43) extending to the second planetary gear mechanism (42) in the axial direction, and includes a third planetary gear (43P) that meshes with the second planetary gear (42P) in the extension portion (43),
the planetary carrier (40C) rotatably supports the first planetary gear (41P) and the second planetary gear (42P), and transmits rotation to the third transmission gear (53),
an outer diameter dimension (RS1) of the first sun gear (41S) is larger than an outer diameter dimension (RS2) of the second sun gear (42S), and
an inner diameter dimension (RR2) of the second ring gear (42R) is larger than an inner diameter dimension (RR1) of the first ring gear (41R).

2. The power transmission device (10) for a work vehicle (100) according to claim 1, wherein
the continuously variable transmission (30) further includes a swash plate (33), and a rotation speed and a rotation direction of the hydraulic motor (32) can be changed according to an angle of the swash plate (33), and
an output at which a work vehicle (100) can travel at a maximum speed is reached in a state where the angle of the swash plate (33) is in a neutral region.

3. The power transmission device (10) for a work vehicle (100) according to claim 1 or 2, further comprising:
an output shaft (65) rotationally driven by the planetary gear mechanism (40); and
a clutch mechanism (60) that engages any one of the first transmission gear (51), the second transmission gear (52), the third transmission gear (53), and the fourth transmission gear 54 with the output shaft (65).

4. The power transmission device (10) for a work vehicle (100) according to any one of claims 1 to 3, wherein the second sun gear (42S) has a smaller number of teeth than the first sun gear (41S).

5. The power transmission device (10) for a work vehicle (100) according to any one of claims 1 to 4, wherein the second ring gear (42R) has a larger number of teeth than the first ring gear (41R).

6. The power transmission device (10) for a work vehicle (100) according to any one of claims 1 to 5, wherein
a gear ratio of the second sun gear (42S) with respect to the first sun gear (41S) is less than 1.0, and
a gear ratio of the second ring gear (42R) with respect to the first ring gear (41R) exceeds 1.0.

7. A work vehicle (100) comprising the power transmission (10) device according to any one of claims 1 to 6.
